# EUROPÄISCHE PATENTSCHRIFT

(11) **EP 2 726 346 B1**
(45) Veröffentlichungstag und Bekanntmachung des Hinweises auf die Patenterteilung: **10.08.2016**
(21) Anmeldenummer: 12725746.7
(22) Anmeldetag: 04.06.2012
(51) Int. Cl.: B60T 8/00, B60T 13/58

(54) **AUSGLEICHSEINRICHTUNG FÜR EIN BREMSSYSTEM UND BREMSSYSTEM MIT EINER DERARTIGEN AUSGLEICHSEINRICTUNG.**
COMPENSATION DEVICE FOR A BRAKE SYSTEM, AND BRAKE SYSTEM HAVING A COMPENSATION DEVICE OF THIS TYPE
DISPOSITIF DE COMPENSATION DESTINÉ À UN SYSTÈME DE FREINAGE ET SYSTÈME DE FREINAGE MUNI DUDIT DISPOSITIF DE COMPENSATION

(30) Priorität: 29.06.2011 DE 102011078340
(43) Veröffentlichungstag der Anmeldung: 07.05.2014
(73) Patentinhaber: Robert Bosch GmbH, 70442 Stuttgart (DE)
(72) Erfinder: BOLZ, Martin-Peter, 77815 Buehl (DE)
(86) Internationale Anmeldenummer: PCT/EP2012/060465
(87) Internationale Veröffentlichungsnummer: WO 2013/000666

(56) Entgegenhaltungen:
- EP-A2- 2 100 784
- WO-A1-98/26966
- WO-A1-2010/083925
- DE-A1-102007 030 441
- DE-C1- 19 543 583
- JP-A- 7 215 206
- JP-A- 2007 030 756

## Beschreibung

### Technisches Gebiet

Die vorliegende Erfindung betrifft ein Bremssystem für ein Kraftfahrzeug, insbesondere ein Bremssystem mit einem variablen Ausgleichsvolumen zur Aufnahme von Bremsflüssigkeit im Rekuperationsbetrieb.

### Stand der Technik

Bei hybriden Antriebssystemen für Kraftfahrzeuge oder rein elektromotorischen Antriebssystemen ist es möglich, einen Teil der durch einen Antriebsmotor erzeugten Bewegungsenergie in elektrische Energie zu wandeln und diese in den Energiespeicher des Fahrzeugs zurückzuspeisen. Derartige Kraftfahrzeuge benötigen jedoch Bremssysteme, die es zulassen, einen Teil des bereitzustellenden Bremsmoments durch eine Energieaufnahme des im generatorischen Betrieb betriebenen Antriebsmotors zu realisieren, ohne dass sich dadurch das gesamte bereitzustellende Bremsmoment erhöht.

Bei hydraulischen Bremssystemen mit Reibungsbremsen sind daher variable Ausgleichsvolumen vorgesehen, die einen Teil des Drucks der Hydraulikflüssigkeit aufnehmen und somit die durch den Bremsflüssigkeitsdruck erreichte Bremswirkung reduzieren. Gleichzeitig wird der Antriebsmotor so betrieben, dass generatorische Leistung abgerufen wird, was sich durch ein in Richtung des Bremsmoments wirkendes Generatormoment auswirkt. In Summe soll das von der Reibungsbremse und dem Generatorbetrieb des Antriebsmotors bewirkte Bremsmoment dem vom Fahrer des Kraftfahrzeugs durch die Bremspedalbetätigung angeforderten Bremsmoment entsprechen.

Die WO9826966A1 und die DE102007030441 zeigen Bremsysteme für ein Kraftfahrtzeug nach Gattung des unabhängigen Anspruchs.

### Offenbarung der Erfindung

Erfindungsgemäß sind eine Ausgleichseinrichtung zum Einsatz in einem Bremssystem gemäß Anspruch 1 sowie ein Bremssystem gemäß dem Anspruch 9 vorgesehen.

Weitere vorteilhafte Ausgestaltungen der vorliegenden Erfindung sind in den abhängigen Ansprüchen angegeben.

Gemäß einem ersten Aspekt ist eine Ausgleichseinrichtung mit einem variablen Ausgleichsvolumen zum Einsatz in einem Bremssystem zum Durchführen eines Rekuperationsbetriebs vorgesehen. Die Ausgleichseinrichtung umfasst:
- einen elektrohydraulischen Aktuator zum Bereitstellen eines variablen Ausgleichsvolumens;
- ein Schutzventil, das ausgebildet ist, um das Ausgleichsvolumen von einem eingangsseitigen Eintrittsvolumen gegen eine externe Druckänderung zu trennen, wenn ein absoluter Druck in dem Eintrittsvolumen einen vorgegebenen

Druckschwellenwert übersteigt.
- Es wird vorgesehen sein, dass bei der obigen Ausgleichseinrichtung das Schutzventil so dimensioniert ist, dass es das Ausgleichsvolumen von dem übrigen Bremssystem trennt, bevor die Selbsthemmung des elektrohydraulischen Aktuators überwunden wird. Dadurch wird verhindert, dass sich ein Kolben des elektrohydraulischen Aktuators aufgrund des hydraulischen Bremsflüssigkeits- drucks in Richtung einer Vergrößerung des Ausgleichsvolumens bewegt. Dadurch können die genannten Nachteile bei einem Ausfall der elektrischen Komponenten der Ausgleichseinrichtung verhindert werden.

Bei hydraulischen Bremssystemen, die einen Rekuperationsbetrieb unterstützen, ist ein variables Ausgleichsvolumen zur Aufnahme von Bremsflüssigkeit notwendig, um einen Teil des Bremsflüssigkeitsdrucks abzubauen, so dass das Bremsmoment einer hydraulisch betriebenen Reibungsbremse reduziert wird. Gleichzeitig wird ein Antriebsmotor in einem generatorischen Betrieb betrieben, der das zu dem gewünschten Bremsmoment fehlende Differenzmoment aufnimmt, um so insgesamt die gewünschte Bremsleistung zu erzielen. Das variable Ausgleichsvolumen wird mithilfe einer Ausgleichseinrichtung mit einem elektrohydraulischen Aktuator bereitgestellt, der auch Plunger genannt wird.

Ein Ausfall der Ausgleichseinrichtung könnte bei Überwindung der Selbsthemmung des elektrohydraulischen Aktuators dazu führen, dass sich das Ausgleichsvolumen in unbeabsichtigter Weise vergrößert und dadurch den Druckanstieg im Bremssystem vermindert. In einem solchen Fall verlängert sich der Pedalweg des Bremspedals und die Bremswirkung kann verzögert oder gar vermindert werden. Um bei einem Ausfall der Ausgleichseinrichtung zu gewährleisten, dass der Druck der Bremsflüssigkeit im Bremssystem den Kolben des Ausgleichsvolumens nicht zurück bewegen kann, ist entweder ein elektrisch betätigbares Ventil zum Unterbinden der Druckbeaufschlagung des Kolbens des elektrohydraulischen Aktuators oder ein Plunger mit Selbsthemmung nötig.

Durch die obige Ausgleichseinrichtung wird bei Erreichen eines bestimmten Bremsflüssigkeitsdrucks im Bremssystem eine Trennung des Ausgleichsvolumens von dem übrigen Bremssystem erzielt. Dadurch wird erreicht, dass der Bremsflüssigkeitsdruck in dem Ausgleichsvolumen begrenzt wird, so dass die Kräfte, die auf den Kolben des elektrohydraulischen Aktuators der Ausgleichseinrichtung wirken, nie so groß werden, dass im elektrohydraulischen Aktuator die Selbsthemmung überwunden werden kann.

Das Vorsehen des Schutzventils im obigen elektrohydraulischen Aktuator ist eine rein mechanische Sicherungseinrichtung. Dies hat den Vorteil, dass im Gegensatz zu elektronischen Einrichtungen im Kraftfahrzeug keine Überwachungsfunktionen mithilfe von Software oder dergleichen implementiert werden müssen.

Weiterhin kann dadurch, dass die Verstellkraft, die zum Schließen des Absicherungsventils benötigt wird, direkt aus dem hydraulischen Bremsflüssigkeitsdruck des Bremssystems generiert wird, ein großer Öffnungsquerschnitt des Schutzventils realisiert werden. Der große Öffnungsquerschnitt behindert den Strom der Bremsflüssigkeit kaum, so dass die Aktuatorleistung des elektrohydraulischen Aktuators nicht negativ beeinflusst wird.

Weiterhin ist vorteilhaft, dass bei einem Ausfall der Fahrzeugelektrik die hydraulische Bremse immer noch voll funktionsfähig ist, da bei steigendem Druck im Bremssystem ab einem Auslöseschwellenwert des Schutzventils das Ausgleichsvolumen des elektrohydraulischen Aktuators versperrt wird, so dass dieser auch bei weiterem Druckanstieg niemals gegen seine Selbsthemmung verstellt wird.

Weiterhin kann der Auslöseschwellenwert, bei dem das Schutzventil schließt, niedriger gewählt werden als der Druck, der einer Bremsung mit einem generatorisch erzeugten Bremsmoment und einer bestimmten Verzögerung von beispielsweise 0,3 g entspricht. Hintergrund ist, dass es bei einem korrekt funktionierenden Bremssystem die Aufgabe des elektrohydraulischen Aktuators ist, einen Anstieg des Bremsflüssigkeitsdrucks zu verhindern. Wenn bei Betätigung des Bremspedals durch den Fahrer der Aufbau des Bremsflüssigkeitsdrucks durch Verfahren des Kolbens des elektrohydraulischen Aktuators verhindert wird, so ist es ausreichend, wenn der Auslöseschwellenwert, bei dem das Schutzventil schließt, einen relativ niedrigen Wert von beispielsweise 5 bar aufweist.

Weiterhin wird durch das Schutzventil das Getriebe des elektrohydraulischen Aktuators vor hohen Belastungen geschützt, so dass dieser nur für seinen Arbeitsbereich dimensioniert werden muss und nicht für Betriebsfälle, bei denen ein wesentlich höherer Druck im Bremssystem herrscht, der nur bei Notbremsungen oder im Missbrauchsfall auftreten kann.

Gemäß einer Ausführungsform kann der elektrohydraulische Aktuator einen Zylinder mit einem Kolben aufweisen, wobei die Stellung des Kolbens das Ausgleichsvolumen definiert, wobei ein Aktuatormotor vorgesehen ist, um den Kolben zu bewegen.

Insbesondere kann eine Federeinrichtung vorgesehen sein, um eine permanente Kraft auf den Kolben des elektrohydraulischen Aktuators in Richtung eines sich verringernden Ausgleichsvolumens auszuüben.

Weiterhin kann die Federeinrichtung eine Spiralfeder umfassen, die den Kolben in Richtung des sich verringernden Ausgleichsvolumens vorspannt.

Es kann vorgesehen sein, dass die Federeinrichtung eine Schlingfeder umfasst, die auf eine mit dem Kolben gekoppelte Spindel ein Drehmoment in einer Richtung ausübt, die zu einer Kraft auf den Kolben in Richtung des sich verringernden Ausgleichsvolumens führt.

Gemäß einem weiteren Aspekt ist ein Bremssystem für ein Kraftfahrzeug vorgesehen, umfassend:
- eine Bremsleitung zum Führen einer Bremsflüssigkeit;
- eine hydraulische Bremseinrichtung zum Bewirken eines Bremsmoments abhängig von einem Bremsflüssigkeitsdruck der Bremsflüssigkeit;
- die obige Ausgleichseinrichtung.

### Kurzbeschreibung der Zeichnungen

Bevorzugte Ausführungsformen der vorliegenden Erfindung werden nachfolgend anhand der beigefügten Zeichnungen näher erläutert. Es zeigen:
- Figuren 1 a und 1 b: schematische Darstellungen verschiedener Betätigungszustände eines Bremssystems mit einer Ausgleichseinrichtung mit einem elektrohydraulischen Aktuator zum Einstellen eines variablen Ausgleichsvolumens;
- Figur 2: eine schematische Darstellung eines Bremssystems mit einer Ausgleichseinrichtung mit einem elektrohydraulischen Aktuator zum Einstellen eines variablen Ausgleichsvolumens mit einem Absicherungsventil bzw. Schutzventil;
- Figur 3: eine beispielhafte Ausführungsform der Ausgleichseinrichtung mit einem elektrohydraulischen Aktuator zum Einsatz in das Bremssystem der Figur 2 in einem geöffneten Zustand;
- Figur 4: eine Darstellung der Ausgleichseinrichtung der Figur 3 in einem geschlossenen Zustand; und
- Figur 5: eine weitere Ausführungsform einer Ausgleichseinrichtung zum Einsatz in das Bremssystem der Figur 2 mit einer Rückstellfeder.

### Beschreibung von Ausführungsformen

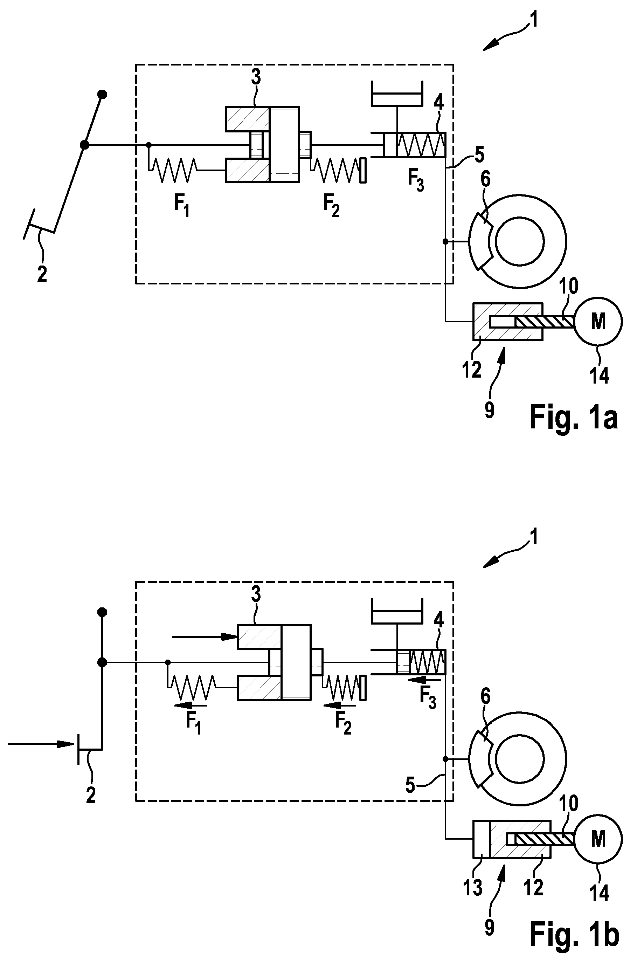

In den Figuren 1 a und 1 b ist ein Bremssystem 1 für die Betätigung einer hydraulischen Bremseinrichtung 6 eines Kraftfahrzeugs, wie z. B. einer Scheibenbremse, schematisch dargestellt. Das Bremssystem 1 umfasst ein Bremspedal 2, das von einem Fahrer des Kraftfahrzeugs mit einer Pedalkraft F_{Pedal} betätigbar ist. Das Bremspedal 2 ist mechanisch mit einem Bremskraftverstärker 3 gekoppelt, der die von einem Fahrer bei Betätigung des Bremspedals 2 ausgeübte Bremskraft mit einer zusätzlichen Kraft Fₛᵤₚₚₒᵣₜ verstärkt. Der verstärkten Bremskraft wirken im Bremssystem 1 Kräfte entgegen, die symbolisch durch die Federkräfte F₁, F₂, F₃ dargestellt sind. Die Kräfte können Feder-, Reibungs- oder sonstige Kräfte umfassen.

Die verstärkte Bremskraft wirkt auf einen Hydraulikzylinder 4, der bei Betätigung des Bremspedals 2 ein Zylindervolumen verringert und dadurch einen Bremsflüssigkeitsdruck in einer Bremsleitung 5 erhöht. Die Bremsleitung 5 ist direkt mit der hydraulischen Bremseinrichtung 6 verbunden, um dort in bekannter Weise ein Bremsmoment hervorzurufen.

Bei Bremssystemen für alternative Antriebssysteme, die das Fahrzeug teilweise oder vollständig mithilfe von elektrischen Antriebsmotoren antreiben, kann ein Teil der kinetischen Energie des Kraftfahrzeugs während eines Bremsvorgangs in elektrische Energie zurückverwandelt werden, indem der Antriebsmotor generatorisch betrieben wird. Beim Erzeugen von elektrischer Energie durch den generatorischen Betrieb des Antriebsmotors entsteht ein Generatormoment, das dem Bremsmoment gleichgerichtet ist.

Soll die durch die Betätigung des Bremspedals 2 angeforderte Bremswirkung nur zu einem Teil von der hydraulischen Bremseinrichtung 6 und zu einem weiteren Teil durch den generatorischen Betrieb des Antriebsmotors bereitgestellt werden, so ist es notwendig, bei Betätigung des Bremspedals 2 den Bremsflüssigkeitsdruck in der Bremsleitung 5 entsprechend zu reduzieren, um die Bremswirkung der hydraulischen Bremseinrichtung 6 zu reduzieren. Dazu ist eine Ausgleichseinrichtung 9 vorgesehen, die ein variables Ausgleichsvolumen bereitstellt, das durch einen elektrohydraulischen Aktuator 10 mit einem Aktuatormotor 14 eingestellt werden kann. Der elektrohydraulische Aktuator 10 ist dazu mit einem Kolben 12 verbunden, der sich in einem Zylinder 11 bewegt, um dort das Zylindervolumen 13 variabel einstellen zu können. Bei Betätigung des Bremspedals 2 kann nun ein Teil des Bremsflüssigkeitsdrucks in der Bremsleitung 5 durch die Ausgleichseinrichtung 9 abgebaut werden, wodurch die Bremswirkung der hydraulischen Bremseinrichtung 6 reduziert wird. Gleichzeitig wird der fehlende Anteil des Bremsmoments durch den Abgriff elektrischer Energie von dem Antriebsmotor und das durch den generatorischen Betrieb des Antriebsmotors bewirkte Generatormoment ausgeglichen. Das Betreiben der Ausgleichseinrichtung 9 und die Ansteuerung des Antriebsmotors für den generatorischen Betrieb wird von einer entsprechenden Steuereinheit übernommen.

Um bei Ausfall des elektrohydraulischen Aktuators 10 zu gewährleisten, dass bei einer Betätigung des Bremspedals 2 der Bremsflüssigkeitsdruck in der Bremsleitung 5 den Kolben der Ausgleichseinrichtung 9 nicht so bewegt, dass sich das variable Ausgleichsvolumen selbsttätig vergrößert, ist üblicherweise zunächst eine Selbsthemmung des elektrohydraulischen Aktuators 10 vorgesehen. Die Selbsthemmung wird häufig durch Vorsehen eines Schneckengetriebes und die dort wirkenden Reibungseffekte bewerkstelligt. Allerdings erfordert das Vorsehen einer Selbsthemmung bei Betätigung des elektrohydraulischen Aktuators 10 auch ein erhöhtes Aktuatormoment. Dies führt in der Regel zu der Notwendigkeit einer größeren Auslegung des den Aktuator 10 betreibenden Aktuatormotors 14.

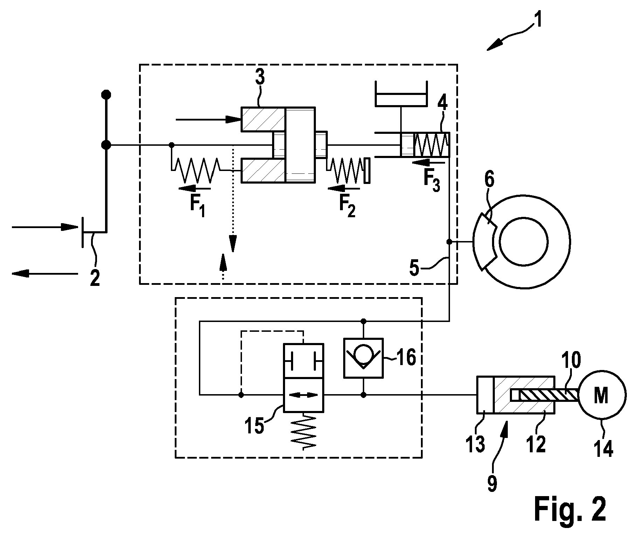

Aus diesem Grund ist, wie in Figur 2 dargestellt, eine Sicherungseinrichtung vorgesehen, die ein Schutzventil 15 aufweist, das bei Erreichen eines bestimmten Bremsflüssigkeitsdrucks in der Bremsleitung 5 das Ausgleichsvolumen von der Bremsleitung 5 trennt, um so hohe Drücke von dem variablen Ausgleichsvolumen fernzuhalten. Dadurch kann wirksam verhindert werden, dass bei Ausfall des Aktuatormotors 14 die Selbsthemmung überwunden wird und das variable Ausgleichsvolumen sich mit den oben beschriebenen Nachteilen und Risiken vergrößert. Der Bremsflüssigkeitsdruck in der Bremsleitung 5 ist als Druckdifferenz zu einem Umgebungsdruck oder einem vorgegebenen Referenzdruck definiert.

Wird das Bremspedal 2 betätigt und ein gewisses Volumen an Bremsflüssigkeit aus dem Hauptbremszylinder in die Bremsleitung 5 bewegt, so kann der Kolben 12 der Ausgleichseinrichtung 9 so verfahren werden, dass sich das variable Ausgleichsvolumen vergrößert. Dadurch kann der Anstieg des Bremsflüssigkeitsdrucks in der Bremsleitung 5 verringert bzw. verhindert werden. In dieser Situation muss allerdings das zusätzliche Bremsmoment (Generatormoment) durch den generatorisch betriebenen Antriebsmotor bereitgestellt werden, bei dem elektrische Energie in einen Energiespeicher zurückgespeichert wird.

Wenn der Antriebsmotor, beispielsweise aufgrund einer zu geringen Fahrzeuggeschwindigkeit, durch den generatorischen Betrieb dem Fahrzeug keine ausreichende Menge an wandelbarer Energie mehr entziehen kann oder der Fahrer durch verstärkte Betätigung des Bremspedals 2 ein größeres Bremsmoment anfordert, so wird der Kolben der Ausgleichseinrichtung 9 wieder in Richtung eines verringerten Ausgleichsvolumens verfahren. Der Bremsflüssigkeitsdruck in der Bremsleitung 5 steigt dann an, so dass die Bremswirkung der hydraulischen Bremseinrichtung 6 wieder erhöht wird. Beim Erreichen des Druckschwellenwerts schließt das Schutzventil 15 in der Ausgleichseinrichtung 9 auch dann, wenn das Ausgleichsvolumen noch nicht auf das Minimalvolumen verringert worden ist.

Weiterhin kann ein Rückschlagventil 16 vorgesehen sein, das das Ausgleichsvolumen mit der Bremsleitung 5 verbindet. Eine positive Druckdifferenz zwischen dem Bremsflüssigkeitsdruck im Ausgleichsvolumen (im Zylinder) und dem Bremsflüssigkeitsdruck in der Bremsleitung 5 kann nun über das Rückschlagventil 16 ausgeglichen werden, ohne dass sich das Schutzventil 15 öffnen muss. Auf diese Weise kann die Funktion der Ausgleichseinrichtung 9 auch bei gesperrtem Schutzventil 15 gewährleistet werden.

Fällt nun der Aktuatormotor 14 der Ausgleichseinrichtung 9 aus, so lässt sich der Kolben 12 der Ausgleichseinrichtung 9 nicht mehr betätigten. Aufgrund seiner Selbsthemmung verbleibt der Kolben 12 in der letzten Position und eine Bewegung des Kolbens 12 wird verhindert, wenn durch Betätigung des Bremspedals 2 ein Bremsflüssigkeitsdruck aufgebaut wird. Wenn der Bremsflüssigkeitsdruck in der Bremsleitung 5 weiter erhöht wird, so dass er einen Druckschwellenwert übersteigt, so schließt das Schutzventil 15 und der über den Druckschwellenwert hinausgehende Bremsflüssigkeitsdruck in der Bremsleitung 5 liegt nicht mehr am Kolben 12 der Ausgleichseinrichtung 9 an.

Das Vorsehen der Ausgleichseinrichtung 9 mit dem Schutzventil 15 und dem Rückschlagventil 16 dient dazu, dass das Ausgleichsvolumen der Ausgleichseinrichtung 9 kein Bremsflüssigkeitsvolumen aufnehmen kann, so lange der Bremsflüssigkeitsdruck in der Bremsleitung 5 höher ist als der Ausgleichsdruckschwellenwert. Das heißt, wenn der Bremsflüssigkeitsdruck in der Bremsleitung 5 den Druckschwellenwert überschritten hat, muss zunächst der Bremsflüssigkeitsdruck in der Bremsleitung 5 wieder unter den Druckschwellenwert gebracht werden, bevor sich das Schutzventil 15 wieder öffnet und Bremsflüssigkeit aus dem Ausgleichsvolumen in die Bremsleitung 5 strömen kann.

Der Druckschwellenwert kann entsprechend der Selbsthemmung der Ausgleichseinrichtung 9 eingestellt werden. Insbesondere kann der Druckschwellenwert so eingestellt werden, dass das Schutzventil 15 geöffnet bleibt, so lange die Ausgleichseinrichtung 9 den Anstieg des Bremsflüssigkeitsdrucks durch aktives Vergrößern des Ausgleichsvolumens relativ niedrig halten kann.

Wird bei einer solchen Einstellung das Bremspedal 2 betätigt, so übernimmt der generatorische Betrieb des Antriebsmotors einen Großteil des benötigten Bremsmoments. Dazu sollte während der Betätigung des Bremspedals 2 das durch den Hauptbremszylinder in die Bremsleitung 5 beförderte Bremsflüssigkeitsvolumen möglichst mit dem selben Volumenstrom in das Ausgleichsvolumen der Ausgleichseinrichtung 9 aufgenommen werden. Der Druck in der Bremsleitung 5 steigt dann an, wenn der in der Ausgleichseinrichtung 9 aufgenommene Volumenstrom von Bremsflüssigkeit den Volumenstrom von Bremsflüssigkeit aus dem Hauptbremszylinder unterschreitet.

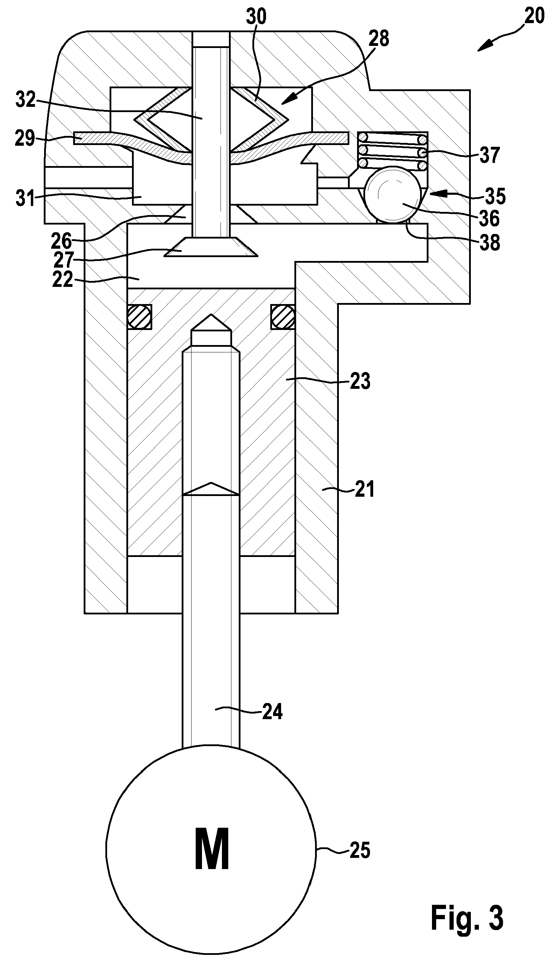

In Figur 3 ist eine Ausgleichseinrichtung 20 schematisch im Querschnitt dargestellt. Die gezeigte Ausgleichseinrichtung 20 weist einen Zylinder 21 auf, in dem sich das Ausgleichsvolumen 22 (Zylindervolumen) befindet. Durch Verschieben eines Kolbens 23 ist das Ausgleichsvolumen 22 variabel. Der Kolben 23 ist über eine Spindel 24 mit einem Aktuatormotor 25 verbunden. Durch Drehung des Aktuatormotors 25 wird die Spindel 24 gedreht und der Kolben 23, der ein Innengewinde aufweist, wird im Zylinder 21 so verfahren, dass sich das Volumen des Ausgleichsvolumens 22 ändert.

An der Stirnseite des Zylinders 21 ist eine Öffnung 26 vorgesehen, in der eine Schutzventilklappe 27 angeordnet ist. Die Schutzventilklappe 27 wird mithilfe einer Kopplungsstange 32 betätigt, die sich in einer Ausnehmung verbunden, die die Schutzventilklappe 27 betätigt. Die Schutzventilklappe 27 wird über ein Betätigungselement 28 betätigt, das eine Membran 29 und eine Rückstellfeder 30 aufweist. Die Rückstellfeder 30 dient zum Vorspannen des Schutzventils 15 in Richtung eines geöffneten Zustands. Die Membran 29 ist mit der Kopplungsstange 32 verbunden und hilft, ein Eintrittsvolumen 31 von dem Umgebungsdruck zu trennen, so dass die Membran 29 abhängig von der Druckdifferenz zwischen dem Druck pᵢₙ in dem Eintrittsvolumen 31 (der dem Druck in einer angeschlossenen Bremsleitung 5 entspricht) und dem Umgebungsdruck p_{Umgebung} gegen die Rückstellfeder 30 bewegt wird. Das Eintrittsvolumen 31 ist Teil der Ausgleichseinrichtung 20 und steht mit einer Bremsleitung 5 über eine Anschlussöffnung 33 in Verbindung.

Es kann weiterhin ein Rückschlagventil 35 (Rückstellventil) vorgesehen sein, das beispielsweise in Form eines Kugelventils ausgebildet sein kann. Das Rückschlagventil 35 verbindet das Ausgleichsvolumen 22 mit dem Eintrittsvolumen 31 und öffnet bei einer positiven Druckdifferenz zwischen dem Druck p_{Ausgleich} der Bremsflüssigkeit in dem Ausgleichsvolumen 22 und dem Druck pᵢₙ der Bremsflüssigkeit in dem Eintrittsvolumen 31. Das Rückschlagventil 35 umfasst eine Kugel 36, die durch eine Feder 37 gegen eine Ventilöffnung 38 einer dem Ausgleichsvolumen 22 gegenüber liegenden Seite gedrückt wird.

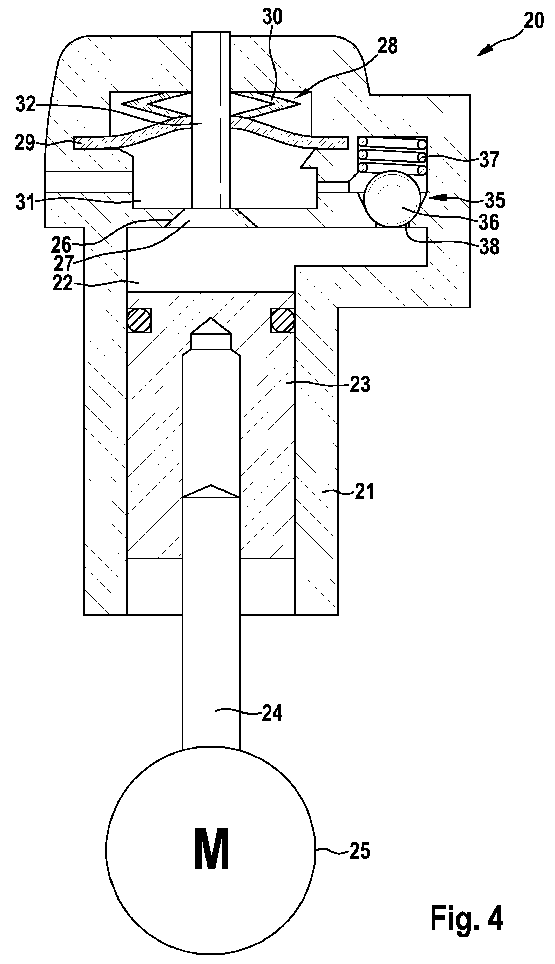

In Figur 4 ist die Ausgleichseinrichtung 20 der Figur 3 mit einem geschlossenen Schutzventil 27 schematisch dargestellt. Man erkennt, dass durch die Druckdifferenz zwischen dem Druck pᵢₙ in dem Eintrittsvolumen 31 und dem Umgebungsdruck p_{Umgebung} die Membran 29 gegen die Rückstellfeder 30 bewegt und dadurch die Schutzventilklappe 27 geschlossen wurde.

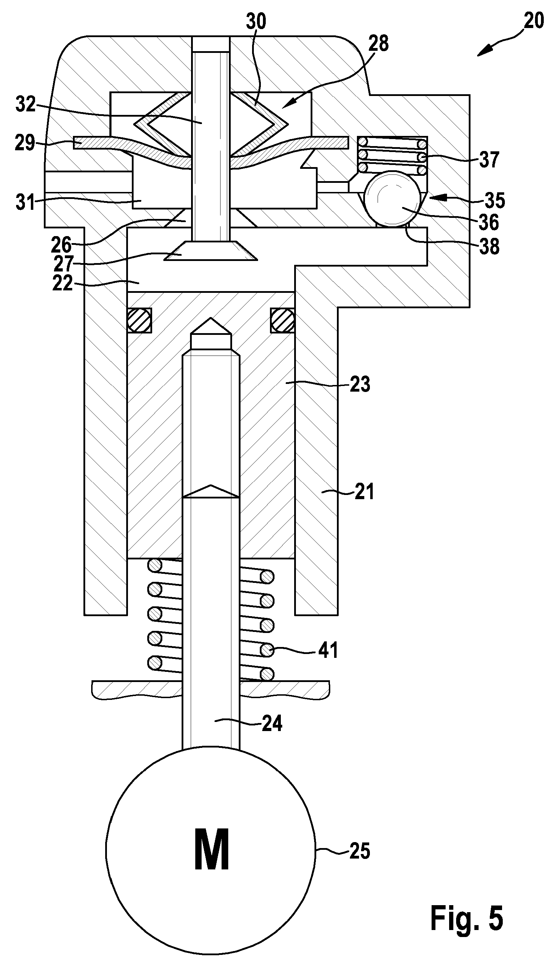

In Figur 5 ist eine weitere Ausführungsform einer Ausgleichseinrichtung 40 im Querschnitt dargestellt. Im Unterschied zu der Ausführungsform der Figuren 3 und 4 ist der Kolben 23 mit einer Federkraft beaufschlagt, beispielsweise direkt durch eine Spiralfeder 41 (wie in Figur 5 dargestellt) oder indirekt, indem die Spindel 24 durch eine Schlingfeder beaufschlagt ist, durch die ein permanentes Drehmoment auf die Spindel 24 ausgeübt wird. Die Federkraft ist so gerichtet, dass der Kolben 23 eine weitere Kraft in Richtung eines sich verringernden Ausgleichsvolumens 22 erfährt. Auf diese Weise kann die Selbsthemmung der Ausgleichseinrichtung 40 weiter erhöht werden, so dass der Aktuatormotor 25 mit einer geringeren Leistung dimensioniert werden kann, da bei zurückgefahrenem Kolben 23, d. h. bei größtmöglichem Ausgleichsvolumen, die Federkraft maximal ist und den Aktuatormotor 25 entsprechend unterstützt.

## Patentansprüche

1. Ausgleichseinrichtung (9) mit einem variablen Ausgleichsvolumen (13, 22) zum Einsatz in einem Bremssystem (1) zum Durchführen eines Rekuperationsbetriebs, umfassend:
- einen elektrohydraulischen Aktuator (10) zum Bereitstellen eines variablen Ausgleichsvolumens (13, 22);
- ein Schutzventil (15), das ausgebildet ist, um das Ausgleichsvolumen (13, 22) von einem eingangsseitigen Eintrittsvolumen (31) gegen eine externe Druckänderung zu trennen, wenn ein absoluter Druck in dem Eintrittsvolumen (31) einen vorgegebenen Druckschwellenwert übersteigt, wobei das Schutzventil (15) so dimensioniert ist, dass es das Ausgleichsvolumen (13,22) von dem übrigen Bremssystem (1) trennt, bevor die Selbsthemmung des elektrohydraulischen Aktuators (10) überwunden wird.

2. Ausgleichseinrichtung (9) nach Anspruch 1, wobei ein Rückstellventil (35) ausgebildet ist, um das Ausgleichsvolumen (13, 22) mit dem eingangsseitigen Eintrittsvolumen (31) zu verbinden und um bei einer positiven Druckdifferenz zwischen dem Ausgleichsvolumen (13, 22) und dem eingangsseitigen Eintrittsvolumen (31) zu öffnen.

3. Ausgleichseinrichtung (9) nach Anspruch 1 oder 2, wobei der elektrohydraulischen Aktuator (10) einen Zylinder (21) mit einem Kolben (23) aufweist, wobei die Stellung des Kolbens (23) das Ausgleichsvolumen (13, 22) definiert, wobei ein Aktuatormotor (25) vorgesehen ist, um den Kolben (23) zu bewegen.

4. Ausgleichseinrichtung (9) nach Anspruch 3, wobei eine Federeinrichtung vorgesehen ist, um eine permanente Kraft auf den Kolben des elektrohydraulischen Aktuators in Richtung eines sich verringernden Ausgleichsvolumens (13, 22) auszuüben.

5. Ausgleichseinrichtung (9) nach Anspruch 4, wobei die Federeinrichtung eine Spiralfeder (41) umfasst, die den Kolben (23) in Richtung des sich verringernden Ausgleichsvolumens (13, 22) vorspannt.

6. Ausgleichseinrichtung (9) nach Anspruch 4 oder 5, wobei die Federeinrichtung eine Schlingfeder umfasst, die auf eine mit dem Kolben (23) gekoppelte Spindel (24) ein Drehmoment in einer Richtung ausübt, die zu einer Kraft auf den Kolben (23) in Richtung des sich verringernden Ausgleichsvolumens (13, 22) führt.

7. Bremssystem (1) für ein Kraftfahrzeug, umfassend:
- eine Bremsleitung (5) zum Führen einer Bremsflüssigkeit;
- eine hydraulische Bremseinrichtung (6) zum Bewirken eines Bremsmoments abhängig von einem Bremsflüssigkeitsdruck der Bremsflüssigkeit;
- eine Ausgleichseinrichtung (9) nach einem der Ansprüche 1 bis 6.

## Claims

1. Compensation device (9) having a variable compensation volume (13, 22) for use in a brake system (1) for the purposes of performing recuperation operation, comprising:
- an electrohydraulic actuator (10) for providing a variable compensation volume (13, 22);
- a protective valve (15) which is designed to isolate the compensation volume (13, 22) from an inlet-side admission volume (31) with respect to an external change in pressure if an absolute pressure in the admission volume (31) exceeds a predefined pressure threshold value, wherein the protective valve (15) is dimensioned so as to isolate the compensation volume (13, 22) from the rest of the brake system (1) before the self-locking action of the electrohydraulic actuator (10) is overcome.

2. Compensation device (9) according to Claim 1, wherein a restoring valve (35) is designed to connect the compensation volume (13, 22) to the inlet-side admission volume (31) and to open in the presence of a positive pressure difference between the compensation volume (13, 22) and the inlet-side admission volume (31).

3. Compensation device (9) according to Claim 1 or 2, wherein the electrohydraulic actuator (10) has a cylinder (21) with a piston (23), wherein the position of the piston (23) defines the compensation volume (13, 22), wherein an actuator motor (25) is provided for the purposes of moving the piston (23).

4. Compensation device (9) according to Claim 3, wherein a spring device is provided for the purposes of exerting a permanent force on the piston of the electrohydraulic actuator in the direction of a decreasing compensation volume (13, 22).

5. Compensation device (9) according to Claim 4, wherein the spring device comprises a spiral spring (41) which preloads the piston (23) in the direction of the decreasing compensation volume (13, 22).

6. Compensation device (9) according to Claim 4 or 5, wherein the spring device comprises a wrap spring which exerts a torque on a spindle (24) which is connected to the piston (23), which torque is oriented in a direction which gives rise to a force on the piston (23) in the direction of the decreasing compensation volume (13, 22).

7. Brake system (1) for a motor vehicle, comprising
- a brake line (5) for conducting a brake fluid;
- a hydraulic brake device (6) for imparting a brake torque in a manner dependent on a brake fluid pressure of the brake fluid;
- a compensation device (9) according to one of Claims 1 to 6.

## Revendications

1. Dispositif de compensation (9) comprenant un volume de compensation variable (13, 22) pour l'utilisation dans un système de freinage (1) pour mettre en oeuvre un mode de récupération, comprenant :
- un actionneur hydroélectrique (10) pour fournir un volume de compensation variable (13, 22) ;
- une soupape de protection (15) qui est réalisée pour séparer le volume de compensation (13, 22) d'un volume d'entrée (31) du côté de l'entrée contre une variation de pression extérieure lorsqu'une pression absolue dans le volume d'entrée (31) dépasse une valeur seuil de pression prédéfinie,
la soupape de protection (15) étant dimensionnée de telle sorte qu'elle sépare le volume de compensation (13, 22) du reste du système de freinage (1) avant que l'autoblocage de l'actionneur électrohydraulique (10) soit surmonté.

2. Dispositif de compensation (9) selon la revendication 1, dans lequel un clapet antiretour (35) est prévu pour relier le volume de compensation (13, 22) à un volume d'entrée (31) du côté de l'entrée et pour s'ouvrir dans le cas d'une différence de pression positive entre le volume de compensation (13, 22) et le volume d'entrée (31) du côté de l'entrée.

3. Dispositif de compensation (9) selon la revendication 1 ou 2, dans lequel l'actionneur électrohydraulique (10) présente un cylindre (21) avec un piston (23), la position du piston (23) définissant le volume de compensation (13, 22), un moteur d'actionneur (25) étant prévu pour déplacer le piston (23).

4. Dispositif de compensation (9) selon la revendication 3, dans lequel un dispositif de ressort est prévu pour exercer une force permanente sur le piston de l'actionneur électrohydraulique dans le sens d'une réduction d'un volume de compensation (13, 22).

5. Dispositif de compensation (9) selon la revendication 4, dans lequel le dispositif de ressort comprend un ressort spiral (41) qui précontraint le piston (23) dans le sens d'une réduction du volume de compensation (13, 22).

6. Dispositif de compensation (9) selon la revendication 4 ou 5, dans lequel le dispositif de ressort comprend un ressort hélicoïdal qui exerce un couple dans un sens sur une broche (24) accouplée au piston (23), laquelle conduit à une force sur le piston (23) dans le sens d'une réduction du volume de compensation (13, 22).

7. Système de freinage (1) pour un véhicule automobile, comprenant :
- une conduite de freinage (5) pour guider un liquide de frein ;
- un dispositif de freinage hydraulique (6) pour provoquer un couple de freinage en fonction d'une pression du liquide de freinage ;
- un dispositif de compensation (9) selon l'une quelconque des revendications 1 à 6.
